# EUROPÄISCHE PATENTSCHRIFT

(11) **EP 3 617 533 B1**
(45) Veröffentlichungstag und Bekanntmachung des Hinweises auf die Patenterteilung: **17.08.2022**
(21) Anmeldenummer: 18192295.6
(22) Anmeldetag: 03.09.2018
(51) Int. Cl.: F16B 25/00, F16B 25/10

(54) **SCHRAUBE UND DEREN VERWENDUNG**
SCREW AND ITS USE
VIS ET SON UTILISATION

(43) Veröffentlichungstag der Anmeldung: 04.03.2020
(73) Patentinhaber: SFS Group International AG, 9435 Heerbrugg (CH)
(72) Erfinder: KELLER, René, 9444 Diepoldsau (CH); NIKOLLBIBAJ, Pal, 5621 Zufikon (CH)

(56) Entgegenhaltungen:
- EP-A1- 0 281 203
- EP-A1- 3 056 747
- WO-A1-2011/023666
- JP-A- 2012 072 840
- US-A- 4 194 430
- US-B2- 8 382 414

## Beschreibung

Die vorliegende Erfindung befasst sich mit einer Schraube, die einerseits ausgelegt ist für die Befestigung von Metallbauteilen wie Trapez- oder Wellblechen auf Unterkonstruktionen aus Holz wie auch zur Verschraubung von überlappenden Metallbauteilen wie Trapez- oder Wellblechen miteinander.

### HINTERGRUND

Für Fassaden und Dächer werden vielfach Blechtafeln, insbesondere Well- oder Trapezblechtafeln verwendet. Es ist bekannt, solche Abdeckbleche oder Abdeckungen mit Hilfe von Schrauben an einer Unterkonstruktion, insbesondere Holzunterkonstruktionen wie Balken, Latten oder Sparren, zu befestigen. Dort, wo die Überlappungsbereiche (Säume) der Blechtafeln nicht mit einer Unterlage der Tragkonstruktion zusammentreffen, werden sogenannte Überlappungsbefestiger eingesetzt, um diese Verbindung dünner Bleche zu gewährleisten. Aus wirtschaftlichen Gründen ist es wünschenswert, dass die besagten Abdeckblechtafeln (aus Aluminium, verzinktem Stahlblech o.ä.) ohne Vorbohren direkt befestigt werden können. Deswegen muss eine solche Schraube in der Lage sein, diese Bleche zu durchdringen und sich danach noch sicher in die Unterkonstruktion (sofern vorhanden) einzuformen. Allerdings sind die aus dem Stand der Technik bekannten Bohrspitzen beim Einsatz auf Dächern nachteilig, weil ausgeworfene Metallspäne eine Nachreinigung erfordern um z.B. Korrosionsprobleme zu vermeiden. Zudem sind Bohrspitzen in der Herstellung aufwändiger als Gewindespitzen. Üblicherweise werden spezialisierte Schrauben für die Befestigungskombination "Blech auf Blech" (Überlappungsbefestiger) und "Blech auf Holz" eingesetzt. Eine Schraube, die beide Einsatzfälle gleichermassen abdecken kann, könnte helfen die Lagerkosten für Montagefirmen zu senken und die Einsatzsicherheit zu erhöhen.

### STAND DER TECHNIK

Die DE 10 2012 215 645 A1 zeigt eine Schraube für den Einsatzbereich "Blech auf Holz". Sie weist einen Schaft aus Edelstahl und eine C-Stahl-Spitze auf, die wiederum ein doppelgängiges Gewinde trägt. Das doppelgängige Gewinde der Spitze ist als Blechgewinde, das Gewinde im Bereich des Schaftes als Holzgewinde ausgeführt.

Die Schrift WO 2011/023666 A1 zeigt eine Schraube mit Kopf, Schaft und einer kegelförmigen Spitze; einem ersten Gewinde, das sich bis in die Schraubenspitze erstreckt, sowie mit einem Zusatzgewinde, dessen Gewindegang innerhalb der Schraubenspitze beginnt und bis in den Schaft reicht. Das Zusatzgewinde hat eine andere Steigung als das erste Gewinde.

Der Flankenwinkel des ersten Gewindes verringert sich auf dem Schaftabschnitt von 50° auf 40°.

Die EP 0 281 203 A1 beschreibt eine Schraube, die im Spitzenbereich ein Doppelgewinde aufweist, das sich als Einzelgewinde auf dem Schaft fortsetzt. Der Flankenwinkel wird, je nach Anwendung, einen Winkel zwischen 30° bis 65° aufweisen.

Davon ausgehend wird eine Schraube angestrebt, die sowohl in einer Unterkonstruktion aus Holz wie auch als Überlappungsbefestiger verwendet werden kann, einfacher herstellbar ist als der Stand der Technik und darüberhinaus handhabungssicher einformbar ist.

### BESCHREIBUNG DER ERFINDUNG

Die Erfindung geht aus von einer Schraube des Standes der Technik, bei der an einen Schraubenkopf 11 sich ein im Wesentlichen zylindrischer Schraubenschaft 12 anschliesst, der wiederum in einen sich (mit zunehmender Distanz vom Schraubenkopf 11) verjüngenden Spitzenbereich 13 mündet mit einer Spitze 15. Ein erster Gewindezug 21 beginnt nahe oder unmittelbar an der Spitze 15 und erstreckt sich bis auf den Schraubenschaft 12. Mit Gewindezug ist dabei die helixförmige (schraubenlinienförmige), längsausgedehnte Erhebung an der Aussenfläche eines Körpers gemeint, wie im Stand der Technik bekannt.

Das Querschnittsprofil eines Gewindezuges kann dabei bekanntermassen dreieckig, trapezförmig in sowohl symmetrischer wie asymmetrischer Ausbildung sein. Tangenten, die an die Flanken dieses Profils angelegt werden, werden zur Bestimmung des Flankenwinkels ϕ hergezogen; der Flankenwinkel ist dabei der Schnittwinkel dieser Tangenten. Nebenbedingung ist hierbei, dass die Tangenten so angelegt werden, dass die Länge des Flankenabschnitts der Tangente minimal wird. Unsymmetrisch ist das Querschnittsprofil dann, wenn die Schnittwinkel der Tangenten mit dem Zylinder des Schraubenschafts 12 (genauer an deren Durchstosspunkt durch die Oberfläche des Schraubenschafts) sich unterscheiden. Alternativ beschrieben ist ein Querschnittsprofil symmetrisch, wenn die Länge beider Flankenabschnitte gleich ist.

Die Schraube 10 gemäss Erfindung ist abschnittsweise doppelgängig, wobei ein zweiter Gewindezug 22 nahe oder unmittelbar an der Spitze 15 beginnt und sich über den Spitzenbereich 13 erstreckt, zwischen den Gewindezügen des ersten Gewindes 21 angeordnet ist und am Übergang zwischen Spitzenbereich 13 und Schraubenschaft 12 endet. Die Steigung des zweiten Gewindezuges 22 entspricht damit jeweils der des ersten Gewindezuges 21.

Mit der Formulierung "nahe oder unmittelbar an der Spitze 15" ist gemeint, dass der Gewindezug bis an die Spitze geführt ist bzw. dort ausläuft bzw. einen Teil der Spitze bildet. Fertigungstechnisch kann dieser Gewindezug auch in Richtung Schraubenkopf etwas rückversetzt sein. Dieser Versatz beträgt aber im Wesentlichen weniger als 1mm bezogen auf die Symmetrieachse 20. Analog ist mit "am Übergang [...] endet" gemeint, dass der Gewindezug direkt am, kurz vor oder kurz nach diesem Übergang endet. Das Ende kann abrupt oder (bevorzugt) als Auslauf gestaltet sein.

Erfindungsgemäss zeichnet sich die Schraube 10 dadurch aus, dass der Flankenwinkel ϕ des ersten Gewindes 21 im Spitzenbereich 13 sich von 90° +/-5° in einem Vorderabschnitt 25 des Spitzenbereichs 13 nahe der Spitze 15 in einem anschliessenden Übergangsbereich 26 verringert bis zu einem Wert 60° +/-5° in einem Hinterabschnitt 27 des Spitzenbereichs 13. Der Flankenwinkel wird dabei bestimmt wie oben beschrieben und kann sowohl eine symmetrische wie eine asymmetrische Ausrichtung / Neigung der Gewindeflanken bedeuten.

Für die Bereiche Vorderabschnitt 25, Übergangsbereich 26 und Hinterabschnitt 27 sei ergänzend erläutert, dass diese Abschnitte nicht überlappend, sondern unmittelbar benachbart in der genannten Reihenfolge angeordnet sind und gemeinsam den Spitzenbereich 13 bilden. Die Spitze 15 beschreibt dabei die Form und Dimension(en) der Schraubenspitze als Teil des Vorderabschnitts 25.

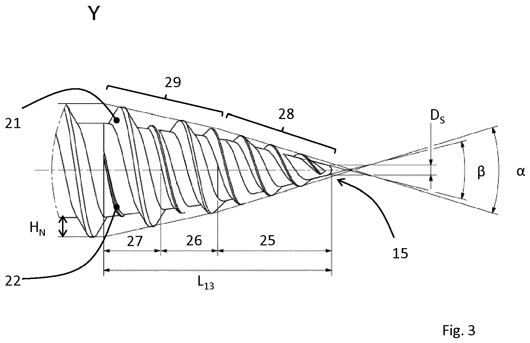

Betrachtet man die Längenrelationen von Vorderabschnitt 25, Übergangsbereich 26 und Hinterabschnitt 27 zueinander, so sind bestimmte Verhältnisse bevorzugt. Eine Relation von 1:1:1 bedeutet, dass Vorderabschnitt 25, Übergangsbereich 26 und Hinterabschnitt 27 jeweils gleich lang sind. Da der Spitzenbereich 13 eine konische Form aufweist, werden diese Längen bzw. Längenrelationen als die Projektion auf die zentrale Längsachse der Schraube 10 beschrieben, wie in Figur 3 gezeigt.

Die oben genannten Übergänge zwischen den Flankenwinkel-Werten finden ausschliesslich im Übergangsbereich 26 statt; im Vorderabschnitt 25 und Hinterabschnitt 27 sind die Werte für ϕ jeweils im Wesentlichen konstant (mit anderen Worten, im Rahmen der Fertigungstoleranzen). Diese Änderung zwischen den beiden Werten von ϕ im Übergangsbereich 26 kann kontinuierlich (mit konstanter Änderungsrate) und stetig erfolgen, stufenweise (unstetig) oder auch diskontinuierlich stetig, sprich mit nicht konstanter Änderungsrate aber ohne sichtbare Übergänge bzw. Stufen.

Die Längenrelationen von Vorderabschnitt 25, Übergangsbereich 26 und Hinterabschnitt 27 können bevorzugt wie folgt gewählt werden: 2:1:1 bis 1:1:1 mit allen möglichen Zwischenwerten im Vorderabschnitt. Weiter kann bevorzugt gewählt werden 2:1:0 bis 1:1:0 mit allen Zwischenwerten. Bei letzteren ist die Besonderheit das Fehlen des Hinterabschnitts 27, sprich, an den Übergangsbereich 26 schliesst sich direkt der Schraubenschaft 12 an bzw. der Spitzenbereich besteht technisch nur aus Vorderabschnitt 25 und Übergangsbereich 26.

Mit der Wahl dieser Parameter wird erreicht, dass die erfindungsgemässe Schraube ein gleichmässiges Einformen ermöglicht, wobei die grösseren Flankenwinkel eine erhöhte Stabilität des ersten Gewindes 21 im Spitzenbereich erlauben. Durch den Übergang zu schmaleren Flankenwinkeln im weiteren Gewindeverlauf wird das Einformen im Schaftbereich erleichtert, ohne die hohen Auszugskräfte zu kompromittieren. Die Doppelgängigkeit im Spitzenbereich 13 erleichtert das Eindringen und Greifen der Schraubenspitze 15 und unterstützt so ein spanfreies bzw. spanarmes Verhalten.

In einer weiteren Ausführungsform kann die Schraube 10 so ausgelegt werden, dass der Flankenwinkel ϕ des ersten Gewindes 21 im Bereich des Schraubenschaftes 12 60° +/-5° beträgt. Bevorzugt werden Schrauben des beschriebenen Typs einstückig aus einem kaltumformbaren Stahl hergestellt. Weitergehend kann der Spitzenbereich 13 eine durch Induktivhärtung erzielte höhere Festigkeit als der Schraubenschaft 12 aufweisen. Dies verbessert die Einsatzbreite der erfindungsgemässen Schraube weiter.

In einer weiteren Variante der erfindungsgemässen Schraube werden die Gewindeflanken des ersten Gewindes 21 symmetrisch ausgelegt. Um die Einformfähigkeit der Gewindespitze weiter zu erhöhen ist es vorteilhaft, die Gewindehöhe H_{N} des ersten Gewindezuges 21 vom Schraubenschaft 12 über den Spitzenbereich 13 hin zur Spitze 15 abnehmend auszulegen. Die Gewindehöhe wird dabei wie üblich ermittelt als die radial betrachtete Höhendifferenz zwischen der Gewindekante und dem Gewindegrund. In einem Anwendungsfall beträgt die Gewindehöhe des ersten Gewindezuges 21 zwischen 0.5mm bis 0.8mm bei einem Schrauben-Nominaldurchmesser von 4.8mm

In einer weiteren Ausführungsform wird die Schraube gemäss vorliegender Erfindung so konstruiert, dass die Gewindehöhe des zweiten Gewindezuges 22, von der Spitze 15 her bis zur Hälfte der axialen Länge L₁₃ des Spitzenbereich 13 zunimmt und danach bis zu ihrem Auslauf wieder abnimmt. Mit anderen Worten, ähnlich dem ersten Gewindezug 21 beginnt der zweite Gewindezug 22 an bzw. nahe der Spitze 15 mit Gewindehöhe 0mm und nimmt bis zur Mitte des Spitzenbereichs 13 auf einen Maximalwert zu und danach wieder ab. Diese Beschreibung bedeutet nicht, dass der Maximalwert nur an diesem einen Punkt erreicht wird und unmittelbar davor und danach eine Zu- bzw. Abnahme beobachtbar ist. Es ist bewusst mitumfasst, dass der Maximalwert auch über einen längeren Gewindeabschnitt gehalten wird und die Zu- bzw. Abnahme auf einem engeren Teilbereich erfolgt. Die maximale Gewindehöhe passt sich den Werten des ersten Gewindezuges an. In einer bevorzugten Ausführungsform nehmen die Gewindehöhen des ersten und zweiten Gewindezuges 21, 22 beginnend mit der Spitze 15 im selben Masse zu, bis der zweite Gewindezug 22 am Übergang zwischen Spitzenbereich 13 und Schraubenschaft 12 ausläuft. Je nach Auslegung kann es sein, dass die maximale Gewindehöhe des zweiten Gewindezuges 22 niedriger bleibt als die des ersten Gewindezuges 21.

In einer Weiterbildung der vorliegenden Erfindung ist es vorteilhaft, den Flankenwinkel ϕ des zweiten Gewindezuges 22 auf 90° +/-5° festzulegen. Der zweite Gewindezug 22 in dieser Ausbildungsform demnach nicht der Flankenwinkelvariation.

Ferner kann vorteilhaft vorgesehen werden, dass ein unmittelbar an den Schraubenkopf 11 anschliessender Abschnitt des Schraubenschaftes 12 als gewindefreier Schaftabschnitt 24 gestaltet ist. Der gewindefreie Abschnitt kann realisiert werden, indem das Gewinde, aus Richtung Spitze 15 betrachtet, ausläuft oder abrupt endet (abgehacktes Gewinde). Die Länge des gewindefreien Unterkopfabschnittes bzw. Schaftabschnittes 24 kann vorteilhaft so gewählt werden, dass sie im Wesentlichen der Dicke der zu verbindenden Bleche entspricht (bei Einsatz als Überlappungsbefestiger). Der Durchmesser des Schaftes im Unterkopfabschnitt 24 kann mit demselben Durchmesser ausgelegt werden wie der restliche Schraubenschaft 12 oder mit leicht erhöhtem Durchmesser, was die Klemmwirkung der zu verschraubenden Blechtafeln erhöht.

Die Steigung des ersten Gewindezuges beträgt bevorzugt zwischen 2.0mm und 2.4mm.

Durch die Doppelgängigkeit im Spitzenbereich 15 bedingt, entspricht die Steigung des zweiten Gewindezuges 22 erfindungsgemäß jeweils der des ersten Gewindezuges 21.

Die erfindungsgemässe Schraube 10 weist einen Spitzenwinkel α auf. Dieser wird ermittelt als Schnittwinkel von Tangenten, die an die Gewindespitzen des Spitzenbereiches 13 angelegt werden. Die Tangenten liegen dabei in einer gemeinsamen Ebene mit der Symmetrieachse 20, damit liegt auch der Schnittpunkt der beiden Tangenten auf der Symmetrieachse 20. In einem ersten spitzennahem Konusabschnitt 28 liegt der Spitzenwinkel α zwischen 30° und 36°, bevorzugt um 34° +/-2°. Diese Winkel sind ein Kompromiss zwischen Stabilität der Spitze und Eindringfähigkeit in das zu befestigende Material.

Erfindungsgemäss weitergebildet werden kann die Schraube 10 dadurch, dass der Spitzenbereich 13 als Doppelkonus ausgeführt wird, wobei ein erster Konusabschnitt 28 an der Spitze 15 beginnt und den Spitzenwinkel α aufweist und übergeht in einen zweiten Konusabschnitt 29 mit einem Spitzenwinkel β, wobei gilt β < α. Mit Doppelkonus ist eine Kombination aus einem Kegelstumpf als Basis (zweiter Konusabschnitt 29) mit aufgesetztem Spitzkonus (Kegel mit Spitze, erster Konusabschnitt 28) gemeint. Im Vorliegenden Fall bedeutet das, dass der Spitzenbereich 13 mit einem Kegel mit spitzerem Profil beginnt und in einen Konus (Kegelstumpf) übergeht. Dessen Spitzenwinkel β wird genauso ermittelt wie der Spitzenwinkel α, nur dass die Tangenten in dem Kegelstumpfbereich (zweiter Konusabschnitt 29) an die Gewindespitzen angelegt werden. Auch hier wird der korrekt ermittelte Schnittpunkt der Tangenten auf der (verlängerten) Symmetrieachse 20 liegen. Wegen β < α ist der von diesen Tangenten gebildete Winkel spitzer als der im ersten Konusabschnitt 28. In einer bevorzugten Varianten wird eine Schraube 10 so ausgelegt, dass gilt 25° < β < 30°.

Betrachtet man, wie sich der Spitzenbereich 13 in den ersten und zweiten Konusabschnitt 28, 29 unterteilt, so lassen sich nützliche Relationen auswählen. Als bevorzugt hat sich herausgestellt, die Relation aus Länge des ersten Konusabschnitt (28) zur Länge des zweiten Konusabschnittes (29) einen Wert zwischen 1:2 und 2:1 einnimmt, bevorzugt 1:1.

Wie bereits erwähnt, ist eine der Stärken der erfindungsgemässen Schraube, das sie sich sowohl als Befestiger von Blechen bzw. Blechtafeln an Holzunterkonstruktionen verwenden lässt, wie auch als Überlappungsbefestiger (Verbindung überlappender Blechtafeln). Sie zeichnet sich durch einen gegenüber Produkten nach Stand der Technik schnelleren Setzvorgang bei geringerem Einformmoment aus, der zudem ohne Spanbildung erfolgt. Durch die erfindungsgemässe Ausgestaltung wird ein Rutschen auf lackierten Blechen beim Ansetzen der Schraube weitgehend vermieden.

### KURZBEZEICHNUNG DER FIGUREN

Figur 1 zeigt eine Schraube gemäss Erfindung mit den wichtigsten Bestandteilen
Figur 2 zeigt den Ausriss X aus Figur 1 in Vergrösserung.
Figur 3 zeigt die Kenngrössen einer erfindungsgemässen Schraube im Spitzenbereich 13 in einem Ausriss Y von Figur 1

### BESCHREIBUNG DER FIGUREN

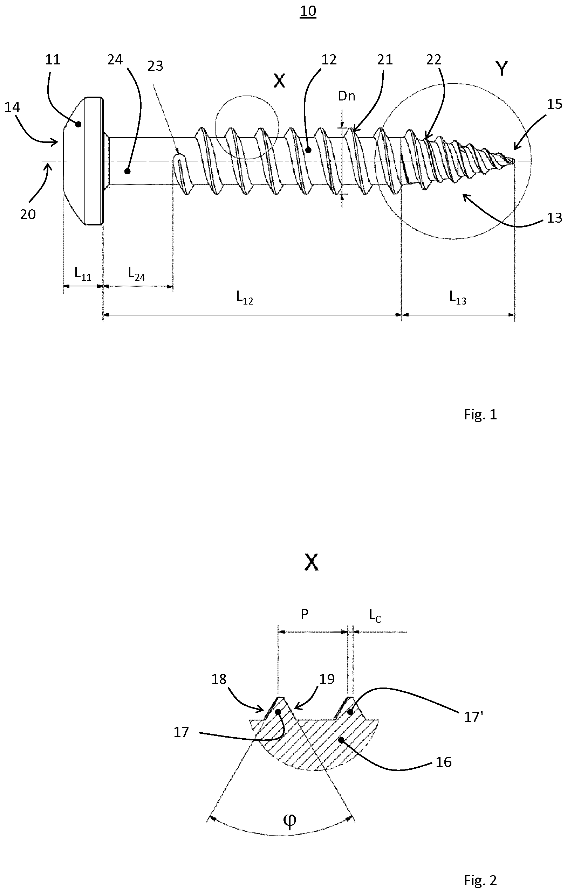

Figur 1 zeigt eine erfindungsgemässe Schraube 10 mit ihren grundsätzlichen Bestandteilen. Der Aufbau beginnt, in der Zeichnung von links nach rechts entlang einer zentralen Symmetrieachse 20 betrachtet, mit einem Schraubenkopf 11 mit einem integrierten Kraftangriff 14. Je nach Einsatzprofil wird hierfür ein Fachmann das geeignete Profil wählen. Der Durchmesser des Schraubenkopfs wird ebenfalls vom Aufgabenprofil bestimmt. An den Kopf 11 Richtung Spitze 15 folgt der Schraubenschaft 12, der hier zunächst als gewindefreier Unterkopfabschnitt 24 beginnt und sich mit einem Schaftabschnitt mit dem ersten Gewindezug 21 fortsetzt. Der Gewindeeinlauf 23 ist als gerundeter, abgehackter Gewindeauslauf dargestellt. Der Nominaldurchmesser D_{N} der Schraube 10 ist der Vollständigkeit halber am Schraubenschaft 12 gezeigt, die Bemassung erfolgt nach Stand der Technik. Der Schraubenschaft 12 geht schliesslich in den Spitzenbereich 13 mit seiner Spitze 15 über. Der Übergang zwischen Schraubenschaft 12 und Spitzenbereich 13 markiert auch den Beginn des zweiten Gewindezuges 22, der sich je nach Auslegung über den Konus bzw. Doppelkonus des Spitzenbereichs 13 erstreckt. Die Längenbemassung der einzelnen Bestandteile in axialer Richtung ist wie folgt markiert: Die Länge des Kopfabschnittes ist mit L₁₁, des gewindefreien Unterkopfabschnittes 24 ist mit L₂₄, die Länge des Schaftes 12 mit L₁₂ markiert. L₁₃ bezeichnet die Länge des Spitzenbereichs 13.

Figur 2 zeigt eine Vergrösserung des mit X markierten Kreises aus Figur 1. Das Detail zeigt zwei Gewindezüge des Schaftabschnittes 12 am Schraubenkörper 16 im Querschnitt. Der Flankenwinkel ϕ ist visualisiert; die Tangenten an der ersten und zweiten Gewindeflanke 18, 19 ist eingezeichnet. Der axiale Abstand P zweier Gewindegänge 17, 17' bezeichnet die Steigung (pitch) des Gewindes. Herstelltechnisch bedingt kann es vorkommen, dass sich dort, wo die Gewindeflanken sich schneiden, statt einer scharfen Gewindekante sich ein schmaler Grat bildet. Dessen Breite ist hier der Vollständigkeit als L_{C} bezeichnet.

Figur 3 zeigt schliesslich in Detailvergrösserung den Spitzenbereich 13. Die Markierungen 25, 26 und 27 bezeichnen den Vorderabschnitt, Übergangsbereich und Hinterabschnitt des Spitzenbereichs 13. In diesen Bereichen finden die oben erläuterten Gewindeflankenprofile bzw. Übergänge statt. Wie erwähnt, kann die Länge des Hinterabschnitts 27 auch 0 betragen.

Die Konusabschnitte 28 und 29 bezeichnen jene Spitzenbereichsanteile, in denen die Spitzenwinkel bestimmt werden, die zu den Spitzenwinkeln α und β gehören.

Die Spitze 15 der erfindungsgemässen Schraube wäre konstruktiv ideal ein Punkt mit Durchmesser D_{S} = 0mm. Technisch real ist sie ein durch den Fertigungsprozess definierter Abschluss des sich verjüngenden Konus und der beiden Gewindezüge 21 und 22 mit einem Durchmesser von unter einem Millimeter. H_{N} markiert die Gewindehöhe des ersten Gewindezuges 21 bereits auf dem Schraubenschaft, L₁₃ die axiale Länge des Spitzenbereichs.

Die in der vorstehenden Beschreibung, in den Zeichnungen sowie in den Ansprüchen offenbarten Merkmale der Erfindung können sowohl einzeln als auch in technisch sinnvoller bzw. vorteilhafter Kombination für die Verwirklichung der Erfindung wesentlich sein. Eine nicht-explizite Darstellung oder Beschreibung einer Kombination von Merkmalen bedeutet nicht, dass eine solche Kombination ausgeschlossen ist.

## Patentansprüche

1. Schraube (10),
mit einem Schraubenkopf (11),
einem daran anschliessenden, im Wesentlichen zylindrischen Schraubenschaft (12), der in einen sich verjüngenden Spitzenbereich (13) mit einer Spitze (15) übergeht,
mit einem ersten Gewindezug (21), der nahe oder unmittelbar an der Spitze (15) beginnend sich bis auf den Schraubenschaft (12) erstreckt und
einem zweiten Gewindezug (22), der nahe oder unmittelbar an der Spitze (15) beginnend sich über den Spitzenbereich (13) erstreckt, zwischen den Gewindezügen des ersten Gewindes (21) angeordnet ist und am Übergang zwischen Spitzenbereich (13) und Schraubenschaft (12) endet,
wobei die Steigung des zweiten Gewindezuges (22) jeweils der des ersten Gewindezuges (21) entspricht;
**dadurch gekennzeichnet, dass**
der Flankenwinkel ϕ des ersten Gewindes (21) im Spitzenbereich (13) sich von 90° +/-5° in einem Vorderabschnitt (25) des Spitzenbereichs (13) nahe der Spitze (15) in einem anschliessenden Übergangsbereich (26) verringert zu einem Wert 60° +/-5° in einem Hinterabschnitt (27) des Spitzenbereichs (13).

2. Schraube (10) nach Anspruch 1, **dadurch gekennzeichnet, dass** der Flankenwinkel ϕ des ersten Gewindes (21) im Bereich des Schraubenschaftes (12) 60° +/-5° beträgt.

3. Schraube (10) nach einem der vorhergehenden Ansprüche, **dadurch gekennzeichnet, dass** die Schraube einstückig aus einem kaltumformbaren Stahl besteht.

4. Schraube (10) nach einem der vorhergehenden Ansprüche, **dadurch gekennzeichnet, dass** zumindest der Spitzenbereich (13) eine durch Induktivhärtung erzielte höhere Festigkeit als der Schraubenschaft (12) aufweist.

5. Schraube (10)nach einem der vorhergehenden Ansprüche, **dadurch gekennzeichnet, dass** die Auslegung der Gewindeflanken des ersten Gewindes (21) symmetrisch ist.

6. Schraube (10) nach einem der vorhergehenden Ansprüche, **dadurch gekennzeichnet, dass** die Gewindehöhe H_{N} des ersten Gewindezuges (21) vom Schraubenschaft (12) über den Spitzenbereich (13) hin zur Spitze (15) abnimmt.

7. Schraube (10) nach einem der vorhergehenden Ansprüche, **dadurch gekennzeichnet, dass** die Gewindehöhe des zweiten Gewindezuges (22), von der Spitze (15) her bis zur Hälfte der axialen Länge L₁₃ des Spitzenbereich (13) zunimmt und danach bis zum Auslauf wieder abnimmt.

8. Schraube (10) nach einem der vorhergehenden Ansprüche, **dadurch gekennzeichnet, dass** der Flankenwinkel des zweiten Gewindezuges 22 90° +/-5° beträgt.

9. Schraube (10) nach einem der vorhergehenden Ansprüche, **dadurch gekennzeichnet, dass** ein unmittelbar an den Schraubenkopf (11) anschliessender Abschnitt des Schraubenschaftes (12) als gewindefreier Schaftabschnitt (24) gestaltet ist.

10. Schraube (10) nach einem der vorhergehenden Ansprüche, **dadurch gekennzeichnet, dass** die Steigung des ersten Gewindezuges zwischen 2.0mm und 2.4mm beträgt.

11. Schraube (10) nach einem der vorhergehenden Ansprüche, **dadurch gekennzeichnet, dass** ein Spitzenwinkel α, gemessen als Schnittwinkel der Tangenten an die Gewindespitzen des Spitzenbereiches (13) in einem ersten Konusabschnitt (28) zwischen 30° und 36°, bevorzugt um 34° +/-2° liegt.

12. Schraube (10) nach einem der vorhergehenden Ansprüche, **dadurch gekennzeichnet, dass** der Spitzenbereich (13) als Doppelkonus ausgeführt ist, wobei ein erster Konusabschnitt (28), beginnend an der Spitze (15) den Spitzenwinkel α aufweist und übergeht in einen zweiten Konusabschnitt (29) mit einem Spitzenwinkel β, wobei gilt β < α.

13. Schraube (10) nach Anspruch 12, **dadurch gekennzeichnet, dass** gilt 25° < β < 30°

14. Schraube (10) nach Anspruch 12-13, **dadurch gekennzeichnet, dass** die Relation aus Länge des ersten Konusabschnitt (28) zur Länge des zweiten Konusabschnittes (29) einen Wert zwischen 1:2 und 2:1 einnimmt, bevorzugt 1:1.

15. Verwendung einer Schraube nach einem der vorhergehenden Ansprüche zum Befestigen von Blechtafeln an einer Unterkonstruktion aus Holz.

16. Verwendung einer Schraube nach einem der Ansprüche 1-14 zum Befestigen von überlappenden Blechtafeln an der Überlappstelle.

## Claims

1. Screw (10),
having a screw head (11),
an adjoining, substantially cylindrical screw shank (12) which merges into a tapering tip region (13) with a tip (15),
having a first thread turn (21) which, starting close to or directly at the tip (15), extends up to the screw shank (12), and
a second thread turn (22) which, starting near or directly at the tip (15), extends over the tip region (13), is arranged between the thread turns of the first thread (21) and ends at the transition between the tip region (13) and the screw shank (12),
wherein the pitch of the second thread turn (22) corresponds in each case to that of the first thread turn (21);
**characterized in that**
the flank angle ϕ of the first thread (21) in the tip region (13) decreases from 90° +/-5° in a front section (25) of the tip region (13) near the tip (15) in an adjoining transition region (26) to a value 60° +/-5° in a rear section (27) of the tip region (13).

2. Screw (10) according to claim 1, **characterized in that** the flank angle ϕ of the first thread (21) in the area of the screw shank (12) is 60° +/-5°.

3. Screw (10) according to one of the preceding claims, **characterized in that** the screw consists in one piece of a cold-formable steel.

4. Screw (10) according to one of the preceding claims, **characterized in that** at least the tip region (13) has a higher strength than the screw shank (12) achieved by induction hardening.

5. Screw (10) according to one of the preceding claims, **characterized in that** the design of the thread flanks of the first thread (21) is symmetrical.

6. Screw (10) according to one of the preceding claims, **characterized in that** the thread height H_{N} of the first thread turn (21) decreases from the screw shank (12) over the tip region (13) towards the tip (15).

7. Screw (10) according to one of the preceding claims, **characterized in that** the thread height of the second thread (22) increases from the tip (15) up to half the axial length L₁₃ of the tip region (13) and then decreases again up to the run-out.

8. Screw (10) according to one of the preceding claims, **characterized in that** the flank angle of the second thread turn (22) is 90° +/-5°.

9. Screw (10) according to one of the preceding claims, **characterized in that** a section of the screw shank (12) directly adjoining the screw head (11) is designed as a thread-free shank section (24).

10. Screw (10) according to one of the preceding claims, **characterized in that** the pitch of the first thread turn is between 2.0 mm and 2.4 mm.

11. Screw (10) according to one of the preceding claims, **characterized in that** a tip angle α, measured as the intersection angle of the tangents to the thread tips of the tip area (13) in a first cone section (28) is between 30° and 36°, preferably around 34° +/-2°.

12. Screw (10) according to one of the preceding claims, **characterized in that** the tip region (13) is designed as a double cone, wherein a first cone section (28), starting at the tip (15), has the tip angle α and merges into a second cone section (29) with a tip angle β, wherein β<α applies.

13. Screw (10) according to claim 12, **characterized in that** 25°<β<30° applies.

14. Screw (10) according to claim 12-13, **characterized in that** the ratio of the length of the first cone section (28) to the length of the second cone section (29) assumes a value between 1:2 and 2:1, preferably 1:1.

15. Use of a screw according to one of the preceding claims for fastening sheet metal panels to a substructure made of wood.

16. Use of a screw according to one of claims 1-14 for fastening overlapping sheet metal panels at the overlapping point.

## Revendications

1. Vis (10) avec
une tête de vis (11),
une tige de vis (12) sensiblement cylindrique qui lui fait suite et qui devient une partie de pointe (13) qui se resserre, avec une pointe (15),
avec un premier filetage (21) qui commence près de la pointe (15) ou immédiatement sur
celle-ci et s'étend sur la tige de vis (12) et avec un deuxième filetage (22) qui commence près de la pointe (15) ou immédiatement sur
celle-ci et s'étend sur la partie de pointe (13), est disposé entre les filets du premier
filetage (21) et se termine à la transition entre la partie de pointe (13) et la tige de vis (12),
dans laquelle le pas du deuxième filetage (22) correspond à celui du premier filetage (21), **caractérisée en ce que**
l'angle des flancs ϕ du premier filetage (21) dans la partie de pointe (13) diminue de 90° ±5° dans un segment antérieur (25) de la partie de pointe (13) proche de la pointe (15), dans une région de transition (26) qui lui fait suite, jusqu'à une valeur de 60° ±5° dans un segment postérieur (27) de la partie de pointe (13).

2. Vis (10) selon la revendication 1, **caractérisée en ce que** l'angle des flancs ϕ du premier filetage (21) dans la région de la tige de vis (12) est de 60° ±5°.

3. Vis (10) selon l'une des revendications précédentes, **caractérisée en ce qu'**elle est faite d'une pièce dans un acier pouvant être formé à froid.

4. Vis (10) selon l'une des revendications précédentes, **caractérisée en ce qu'**elle présente au moins dans la partie de pointe (13) une résistance obtenue par trempe par induction et supérieure à celle de la tige de vis (12).

5. Vis (10) selon l'une des revendications précédentes, **caractérisée en ce que** les flancs des filets du premier filetage (21) ont une forme symétrique.

6. Vis (10) selon l'une des revendications précédentes, **caractérisée en ce que** la hauteur du filet H_{N} du premier filetage (21) diminue de la tige de vis (12) vers la pointe (15) sur la partie de pointe (13).

7. Vis (10) selon l'une des revendications précédentes, **caractérisée en ce que** la hauteur du filet du deuxième filetage (22) augmente de la pointe (15) jusqu'à la moitié de la longueur axiale L₁₃ de la partie de pointe (13) et diminue ensuite jusqu'au bout.

8. Vis (10) selon l'une des revendications précédentes, **caractérisée en ce que** l'angle de flancs du deuxième filetage (22) est de 90° ±5°.

9. Vis (10) selon l'une des revendications précédentes, **caractérisée en ce qu'**un segment de la tige de vis (12) suivant immédiatement la tête de vis (11) est conformé comme un segment de tige (24) sans filetage.

10. Vis (10) selon l'une des revendications précédentes, **caractérisée en ce que** le pas du premier filetage est compris entre 2,0 mm et 2,4 mm.

11. Vis (10) selon l'une des revendications précédentes, **caractérisée en ce qu'**un angle aigu α, mesuré comme l'angle d'intersection des tangentes des pointes des filets de la partie de pointe (13) dans un premier segment de cône (28), est compris entre 30° et 36°, de préférence de 34° ±2°.

12. Vis (10) selon l'une des revendications précédentes, **caractérisée en ce que** la partie de pointe (13) est réalisée comme un double cône, dans lequel un premier segment de cône (28) commençant à la pointe (15) présente l'angle aigu α et est suivi d'un deuxième segment de cône (29) ayant un angle aigu β, où β < α.

13. Vis (10) selon la revendication 12, **caractérisée en ce que** l'on a 25° < β < 30°.

14. Vis (10) selon les revendications 12-13, **caractérisée en ce que** le rapport entre la longueur du premier segment de cône (28) et celle du deuxième segment de cône (29) ont une valeur comprise entre 1:2 et 2:1, de préférence de 1:1.

15. Utilisation d'une vis selon l'une des revendications précédentes pour fixer des panneaux de tôle sur une infrastructure en bois.

16. Utilisation d'une vis selon l'une des revendications 1 à 14 pour fixer des panneaux de tôle à clin sur un point d'assemblage par recouvrement.
